# EUROPEAN PATENT SPECIFICATION

(11) **EP 4 027 179 B1**
(45) Date of publication and mention of the grant of the patent: **14.08.2024**
(21) Application number: 21151170.4
(22) Date of filing: 12.01.2021
(51) Int. Cl.: G02B 6/38, G02B 6/44

(54) **FLAME RETARDANT FIBER OPTIC CABLE WITH HALOGEN FREE SHEATH FOR BLOWING APPLICATIONS**
FLAMMHEMMENDES GLASFASERKABEL MIT HALOGENFREIER HÜLLE FÜR BLASANWENDUNGEN
CÂBLE À FIBRE OPTIQUE IGNIFUGE DOTÉ D'UNE GAINE SANS HALOGÈNE POUR DES APPLICATIONS DE SOUFFLAGE

(43) Date of publication of application: 13.07.2022
(73) Proprietor: Corning Research & Development Corporation, Corning, New York 14831 (US)
(72) Inventor: HEINZ, Michael Alexander, 10249 Berlin (DE); KINNERA, Ravinder Kumar, 10717 Berlin (DE)
(74) Representative: Sturm, Christoph

(56) References cited:
- EP-A1- 0 829 742
- EP-A1- 1 006 385
- US-A1- 2020 386 964

## Description

### BACKGROUND

The disclosure relates generally to a fiber optic cable and more particularly to a flame retardant fiber optic cable configured for blowing through a duct of a building. Certain current standards require a degree of flame retardancy for construction products, especially for indoor applications. Some of these standards extend to electrical and telecommunication cables. Often, to achieve the requisite degree of flame retardance for these cables, desired mechanical properties may have to be compromised for the cable construction. Besides reliability over its life, the compromised mechanical properties can also make installation of the optical fiber cable more difficult.

EP 0 829 742 A1 discloses an optical fiber cable comprising: a subunit having a first interior surface and a first exterior surface, wherein the first interior surface defines a central bore along a longitudinal axis of the optical fiber cable, at least one optical fiber disposed within the central bore of the subunit, a cable sheath disposed around the plurality of strengthening yarns, the cable sheath having a second interior surface and a second exterior surface, wherein the second exterior surface defines an outermost surface of the optical fiber cable, wherein the cable sheath comprises a low smoke, zero halogen material.

US 2020 / 386 964 A1 discloses a low smoke, zero halogen materia.

EP 1 006 385 A1 discloses other prior art.

### SUMMARY

The present disclosure relates to an optical fiber cable according to claim 1. The optical fiber cable includes a subunit having a first interior surface and a first exterior surface. The first interior surface defines a central bore along a longitudinal axis of the optical fiber cable. At least one optical fiber is disposed within the central bore of the subunit, and a plurality of strengthening yarns is disposed around the subunit. A cable sheath disposed around the plurality of strengthening yarns. The cable sheath has a second interior surface and a second exterior surface. The second exterior surface defines an outermost surface of the optical fiber cable. The cable sheath comprises a low smoke, zero halogen (LSZH) material having 35% to 45% by weight of a polymer blend, the polymer blend being filled with mineral-based flame retardant additives. The LSZH material of the cable sheath has a thermal contraction stress of less than 1.0 MPA. The optical fiber cable further comprises a bedding layer disposed between the second interior surface of the cable sheath and the plurality of strengthening yarns, wherein the bedding layer comprises a greater amount of mineral-based flame retardant additives than the cable sheath. The cable sheath has also a thermal contraction stress of less than 1.0 MPA

The LSZH material of the cable sheath may have an elongation at break of at least 180% but not more than 230% and a Shore A hardness between 40 and 90. The cable sheath has also an elongation at break of at least 180% but not more than 230% and a Shore A hardness between 40 and 90.

The LSZH material of the cable sheath may include in addition to the polymer blend a mineral-based flame retardant additive in an amount of at least 55% by weight.

Preferably, the LSZH material of the cable sheath comprises from 55% to 65% by weight of the mineral-based flame retardant additive and from 35% to 45% by weight of a polymer blend. The polymer blend may include a co-polyester or co-polyether and a polyolefin or a polyolefin elastomer.

The optical fiber cable may be an indoor optical fiber cable. The indoor optical fiber cable includes at least one subunit. Each subunit includes a first interior surface and a first exterior surface. The first interior surface of each subunit defines a central bore along a longitudinal axis of the indoor optical fiber cable. At least one optical fiber is disposed within the central bore of each subunit, and at least one strengthening yarn is wrapped around the at least one subunit. A cable sheath is disposed around the at least one strengthening yarn. The cable sheath has a second interior surface and a second exterior surface. The second exterior surface defines an outermost surface of the indoor optical fiber cable.

The low smoke, zero halogen (LSZH) material may have a limiting oxygen index of at least 40% as measured according to ASTM D 2863 A. The LSZH material may have a density of at least 1.6 g/cm³. The cable sheath has also a limiting oxygen index of at least 40% as measured according to ASTM D 2863 A and a density of at least 1.6 g/cm³.

The second exterior surface defines an outermost surface of the optical fiber cable and an outer diameter of the optical fiber cable. The outer diameter is preferably 3 mm or less. The optical fiber cable is configured to be blown a distance of at least 150 m through a duct having an inner diameter of 3.5 mm to 4 mm, and the optical fiber cable achieves a B2_{ca} - s1, a1, d0 rating according to EN13501-6.

Additional features and advantages will be set forth in the detailed description that follows, and in part will be readily apparent to those skilled in the art from the description or recognized by practicing the embodiments as described in the written description and claims hereof, as well as the appended drawing.

It is to be understood that both the foregoing general description and the following detailed description are merely exemplary, and are intended to provide an overview or framework to understand the nature and character of the claims.

### BRIEF DESCRIPTION OF THE DRAWING

The accompanying drawing is included to provide a further understanding and are incorporated in and constitute a part of this specification. The drawing illustrates one or more embodiment(s), and together with the description serves to explain principles and the operation of the various embodiments.
FIG. 1 depicts an embodiment of a flame retardant optical fiber cable, according to an exemplary embodiment.
FIG. 2 depicts an embodiment of a flame retardant optical fiber cable having a bedding layer, according to the invention.
FIG. 3 depicts an embodiment of a flame retardant optical cable having multiple subunits, according to an exemplary embodiment.
FIG. 4 depicts another embodiment of a flame retardant optical fiber cable having multiple subunits, according to an exemplary embodiment.

### DETAILED DESCRIPTION

Various embodiments of an optical fiber cable are provided that is configured to achieve a B2_{ca}- s1a, a1, d0 rating described in EN 13501-6. The optical fiber cable achieves the flame retardance rating through use of a cable sheath comprising a highly-filled, flame retardant composition and, a bedding layer having a composition with an even greater amount of flame retardant filling than the cable sheath. In certain embodiments, the cable includes a single subunit that is capable of carrying up to twelve optical fibers while still being able to be blown through a 3.5 mm or 4 mm duct within a building. The optical fiber cable is able to be blown through such ducts because the diameter of the optical fiber cable is kept to 3 mm or less and because the material from which the cable sheath is made has a low coefficient of friction. Space is conserved in the cable construction to keep the diameter at or below 3 mm by excluding rigid strength elements, such as glass reinforced plastic rods. Such rigid strength elements can be excluded because the material from which the cable sheath is made allows the cable to pass relevant temperature cycling tests without the need for rigid strength elements. Accordingly, in view of the flame retardancy and the ability of the optical fiber cable to be blown through such a narrow duct, the optical fiber cable disclosed herein is particularly suitable for use in indoor applications. In other embodiments, the optical fiber cable includes a plurality of subunits configured to carry, e.g., hundreds of optical fibers, and in such embodiments, the individual subunits contain strengthening yarns disposed therein to facilitate connnectorization of the subunits. These and other aspects and advantages will be discussed in relation to the exemplary embodiments disclosed herein. These embodiments of the optical fiber cable disclosed herein are provided by way of example and not by way of limitation.

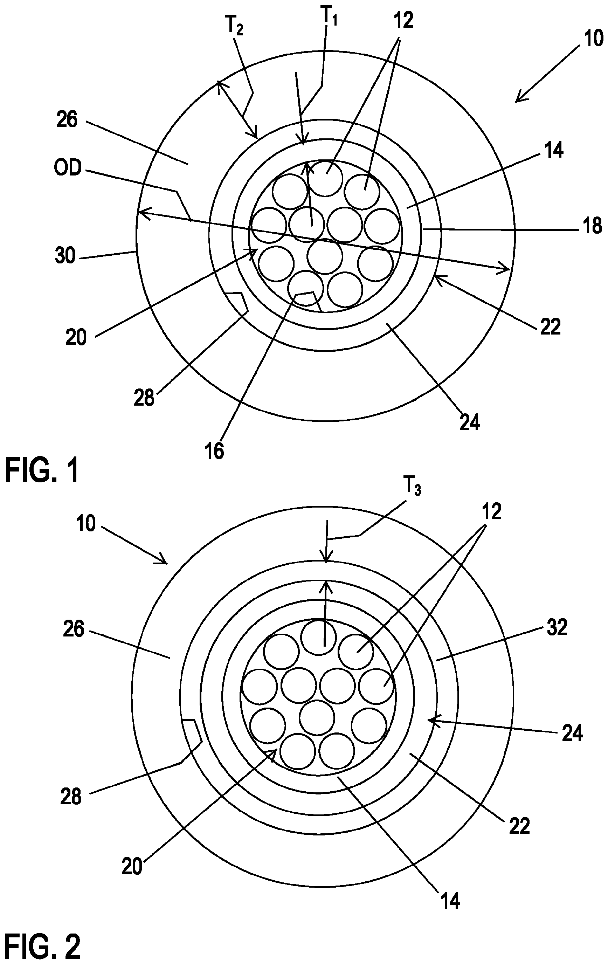

FIG. 1 depicts an embodiment of an optical fiber cable 10, particularly for indoor use, that includes a plurality of optical fibers 12 disposed within a subunit 14. The subunit 14 includes a first interior surface 16 and a first exterior surface 18. The first interior surface 16 defines a central bore 20 in which the optical fibers 12 are disposed. In the embodiment shown in the FIG. 1, the optical fibers 12 are arranged within the bore 20 in a loose tube configuration (albeit with a relatively low amount of free space with in the subunit 14 as compared to other embodiments discussed below). In embodiments, the optical fibers 12 are bare or coated fibers, i.e., they include a core, a cladding surrounding the core, and a coating (optionally including a color-coded ink/pigment layer for identification). In embodiments, the number of optical fibers 12 in the subunit is from one to twelve optical fibers. In particular embodiments, the number of optical fibers 12 in the subunit is four, six, eight, or twelve optical fibers 12. In embodiments, the optical fiber cable 10 does not include any water-blocking gels within the bore 20, particularly if the optical fiber cable 10 is used for indoor applications.

The subunit 14 has a first thickness T₁ between the first interior surface 16 and the first exterior surface 18. In embodiments, the first thickness T₁ is from 0.05 to 0.5 mm, particularly about 0.1 mm for the embodiment shown in FIG. 1. In embodiments, the subunit 14 is comprised of a flame retardant compound comprising a mixture of thermoplastic elastomers based on polyolefins (e.g., polyethylene (PE), polypropylene (PP), polybutene, ethylene propylene diene monomer (EPDM) rubber, ethylene propylene rubber (EPR), ethylene vinyl acetate (EVA), ethylene butyl acrylate copolymer (EBA), ethylene methacrylate (EMA)) filled with one or more mineral-based flame retardants (e.g., aluminum trihydrate (ATH), magnesium hydroxide (MDH), or calcium carbonate (CaCO₃)). In embodiments, the compound is a blend of PP and a polyolefin or a rubber that is filled with a mixture of MDH and CaCO₃. Advantageously, because of the relatively low first thickness T₁ of the subunit 14, the optical fibers 12 can be used as ripcords to tear open the subunit 14 during installation. That is, the subunit 14 can be torn by pulling the optical fibers 12 against the wall of the subunit 14.

Disposed around the subunit 14 is a yarn layer 22 comprising a plurality of strengthening yarns 24. In embodiments, the strengthening yarns 24 are wrapped, stranded, or braided around the subunit 14 so as to take tensile stresses off of the optical fibers 12, e.g., when the optical fiber cable 10 is pulled. In other embodiments, the strengthening yarns 24 run longitudinally along the length of the subunit 14. In embodiments, the yarn layer 22 is from 0.05 mm to 0.2 mm thick, particularly about 0.1 mm. The yarn layer 22 is in contact with the exterior surface 18 of the subunit 14. In embodiments, the strengthening yarns 24 comprise aramid fibers, glass fibers, basalt fibers, or a combination of two or more thereof.

In the embodiment depicted in FIG. 1, a cable sheath 26 is disposed around the yarn layer 22. In embodiments, the cable sheath 26 forms a continuous and contiguous outer layer of the optical fiber cable 10 along the length of the optical fiber cable 10. The cable sheath 26 includes a second interior surface 28 and a second exterior surface 30 that define a second thickness T₂ therebetween. In embodiments, the second thickness T₂ is from 0.3 mm to 0.7 mm. Further, in embodiments, the second exterior surface 30 defines the outermost surface of the optical fiber cable 10. As such, the second exterior surface 30 further defines an outer diameter OD of the optical fiber cable 10. In embodiments, the outer diameter OD of the optical fiber cable 10 is no more than 3 mm, particularly from 2.2 mm to 2.7 mm (depending on fiber count). For example, in embodiments, an optical fiber cable 10 carrying four optical fibers 12 has an outer diameter OD of from about 2.2 mm to about 2.4 mm, and in embodiments, an optical fiber cable 10 carrying twelve optical fibers 12 has an outer diameter OD of from about 2.6 mm to 2.7 mm.

According to the invention as defined in claim 1, the cable sheath 26 of the optical fiber cable 10 is made of a low-smoke, zero halogen (LSZH) material. The LSZH material comprises a thermoplastic polymer blend filled with mineral-based flame retardant additives. In an embodiment, the polymer blend of the LSZH material comprises from 35% to 45% by weight of a co-polyester or co-polyether and polyolefins or polyolefin-based elastomers. In such embodiments, the mineral-based flame retardant additives may comprise at least one of aluminum trihydrate (ATH) or magnesium hydroxide (MDH) in an amount of at least 55% by weight and up to 65% by weight. Further, the LSZH material may also include other synergistic flame retardant additives such as glass formers or ceramifiers (e.g., zinc borate, zinc molybdate, zinc stannate, etc.), nano-clays (e.g., bentonite, sepiolite, etc.), or mineral fillers (e.g., boehmite, silica, magnesiumoxisulfate, etc.) in the amount of 1.5% to 8% by weight (in addition to 55% to 65% by weight of the mineral-based flame retardant additives). The LSZH material may also include a coupling system, such as a maleic acid anhydride-grafted polyolefin, a vinyl-silane, or an aminosilane, in an amount of 0.5% to 4% by weight. Further, the LSZH material may include thermal stabilizers, antioxidants, and or processing additives in the amount of 0.1% to 1.0% each.

In embodiments, the LSZH material of the cable sheath 26 exhibits certain mechanical and flame retardant properties. In particular embodiments, the LSZH material of the cable sheath 26 has a tensile strength of 10 MPa or higher and an elongation at break of at least 180% (both as measured according to IEC 811-1-1). In accordance with aspects of the present disclosure, the tensile strength of the LSZH material may be greater than 10 MPa but less than 12 MPa and the elongation at break may at least 180% but not more than 230%. Further, in particular embodiments, the LSZH material has a Shore A hardness of 90 or lower (as measured according to ISO 7619-1). In accordance with aspects of the present disclosure, the Shore A hardness may be between 40 and 90. In particular embodiments, the LSZH material has a density of at least 1.6 g/cm³. In accordance with aspects of the present disclosure, the density is at least 1.6 g/cm³ and less than 1.65 g/cm³. Still further, in embodiments, the storage modulus of the LSZH material in tensile mode at -40 °C is less than 3000 MPa and at -50 °C is less than 3500 MPa. In embodiments, the LSZH material has a brittleness temperature below -50°C. Additionally, in embodiments, the LSZH material exhibits a penetration of less than 2% in a hot pressure test for 6 hours at 80 °C (as measured according to IEC 60811-508). Advantageously, the optical fiber cable 10 can be cycled between -40 °C and 70 °C without creating substantial change in attenuation (<0.30 dB/km at 1550 nm) of the signal carried by the optical fibers 12 according to IEC 60794-1-2-F1. Accordingly, rigid strength elements, such as glass-reinforced plastic rods, are not required to prevent such attenuation associated with thermal strain, which means that the diameter of the optical fiber cable 10 can be reduced by excluding these elements.

A low thermal contraction stress of the thermoplastic polymer blend of the sheath 26 shows the extraordinary ability of the sheath material to resist shrinking through temperature cycling, thus allowing the removal of rigid strength elements typical in conventional LSZH cable designs. Testing for thermal contraction stress may be performed using dynamic mechanical analysis (DMA) in a temperature range of 35°C to -40°C according to ASTM D4065. The cable sheath 26 of the optical fiber cable 10 has a thermal contraction stress of less than 1.0 MPa and preferably has a thermal contraction stress of less than 0.75 MPa.

With respect to the flame retardant properties, the LSZH material of the cable sheath 26 has a limiting oxygen index (LOI) of at least 40% (as measured according to ASTM D 2863 A). In accordance with aspects of the present disclosure, the LSZH material may have a LOI of at least 40% and less than 50%. Further, in embodiments, a sample of the LSZH material of the cable sheath 26 having a length and width of 100 millimeters (mm) and a thickness of 3 mm when tested with 50kW irradiation exhibits a peak heat release rate (PHRR) of 200 kW/m² or less, a total heat release (THR) of 65 MJ/m² or less, and a smoke production (SEA) of 150 m²/kg or less when measured using a cone calorimeter according to ISO 5660-1. In accordance with aspects of the present disclosure, the PHRR may be greater than 150 kW/m² up to 200 kW/m², the THR may be greater than 50 MJ/m² up to 65 MJ/m² and the SEA may be greater than 30 m²/kg up to 150 m²/kg.

FIG. 2 depicts an optical fiber cable 10 according to the invention as defined in claim 1 including a bedding layer 32 disposed between the yarn layer 22 and the cable sheath 26. As shown in FIG. 2, the bedding layer 32 extends circumferentially around the yarn layer 22 and is in contact with the second interior surface 28 of the cable sheath 26. In embodiments, the bedding layer 32 has substantially the same thickness as the cable sheath 26. In embodiments, the bedding layer 32 has a third thickness T₃ of from 0.2 mm to 0.4 mm, and the combined thickness of the bedding layer 32 and the cable sheath 26 is thus from 0.3 mm to 0.7 mm. Further, in embodiments, the bedding layer 32 is substantially comprised of flame retardant fillers with a polymer binding. As such, the bedding layer 32 has a dough-like consistency and does not impart any substantial mechanical properties to the optical fiber cable. However, the bedding layer 32 improves flame retardant performance of the optical fiber cable 10 because some of the cable sheath 26 is replaced with the bedding layer 32, which has more flame retardant material than the cable sheath 26. Advantageously, in embodiments, the bedding layer 32 also reduces the cost to produce the optical fiber cable 10 because more of the relatively less expensive mineral-based flame retardant additive and less of the relatively more expensive cable sheath compound is used in the optical fiber cable 10.

In particular embodiments, the bedding layer 32 is comprised of 70% to 85% by weight of a mineral-based flame retardant additive, such as aluminum trihydrate or magnesium hydroxide. In embodiments, a portion of the mineral-based flame retardant additive may be substituted with calcium carbonate. The polymer binder of the bedding layer 32 is comprised of 10% to 30% by weight of a thermoplastic blend of polyolefin elastomers (e.g., EVA, EBA, EMA, EPR, EPDM rubber, and/or styrene-ethylene/butylene-styrene (SEBS)) or polyolefins (e.g., low density polyethylene (LDPE), linear low density polyethylene (LLDPE, and/or polypropylene (PP)). The bedding layer 32 may also comprise a coupling system, such as a maleic acid anhydride-grafted polyolefin, a vinyl-silane, or an aminosilane, in an amount of 0.5% to 4% by weight. Further, the bedding layer 32 may include thermal stabilizers, antioxidants, and or processing additives in the amount of 0.1% to 1.0% each. In embodiments, the bedding layer 32 has a density of 1.7 g/cm³ or greater.

Advantageously, the embodiments of the optical fiber cables 10 described with respect to FIGS. 1 and 2 are capable of being routed through a duct having an inner diameter of 3.5 mm to 4 mm (or larger) as may typically be found running through a building interior. In particular, the optical fiber cables 10 are configured to carry up to twelve optical fibers 12 while still being able to be blown at least 150 m through a duct having an inner diameter as low as 3.5 mm. An optical fiber cable 10 constructed according to the foregoing description was blown through a track of duct that was arranged in a spiraling rectangular path having side lengths of 7 m and 3 m with corners having a radius of curvature of 10 mm x 5 mm. One rectangular path length was equal to approximately 20 m. Accordingly, in traveling 150 m through the duct, the optical fiber cable 10 completed 32 turns. The ability to be blown through a duct having an inner diameter as low as 3.5 mm is provided in part by the small outer diameter of the optical fiber cable (3 mm or less) and in part by the low coefficient of friction of the LSZH material (from 0.21 to 0.24) used for the cable sheath.

Additionally, the construction of the optical fiber cable 10 according to the present disclosure provides other advantages with respect to cable installation. Typically, an optical fiber cable 10 may be routed (e.g., through a duct as described above) to a splice box where the individual optical fibers 12 can be spliced for distribution from the splice box. As mentioned, the cable sheath 26 allows for blowing of the optical fiber cable 10 through a duct to the splice box while providing flame retardancy along the substantial portion of the length. Once the optical fiber cable 10 reaches the splice box, the cable sheath 26 is able to be ring-cut, and at least a length of 1.5 m is able to be pulled off longitudinally over the yarn layer 22 and subunit 14. In this regard, the use of the above-described compounds for the subunit 14 helps prevent sticking between the cable sheath 26 and the subunit 14 such that the length of cable sheath 26 can be pulled over the subunit 14. Within the splice box, the subunit 14 protects the individual optical fibers 12 until they reach their splice location (e.g., inside a splice cassette).

Further, the embodiments of the optical fiber cables 10 described herein achieve a rating of B2_{ca} - s1a, a1, d0 described in EN 13501-6. In order to achieve rating B2_{ca}, the optical fiber cable 10 must pass the heat release and flame spread requirements of EN50399. Further, to achieve the rating s1a for smoke production, the optical fiber cable 10 must have a total smoke production of no more than 50 m² and a smoke product rate of no more than 0.25 m²/s as measured according to EN50399 (which corresponds to the "s1" portion of the rating) and must pass the three-meter cube test according to EN 61034-2 with a minimum of 80% light transmission (which corresponds to the "a" portion of the rating). To achieve the rating a1 for acidity, the combusted gasses produced by the individual components of the optical fiber cable 10 during burn testing must have a conductivity of less than 2.5 µS/mm and a pH of greater than 4.3 according to EN50267-2-3. Finally, in order to achieve a flaming droplets rating of d0, the optical fiber cable 10 must exhibit no flaming droplets or particles as tested according to EN50399. Embodiments of the optical fiber cables 10 described herein were able to meet each of these requirements to achieve the rating of B2_{ca}- s1a, a1, d0.

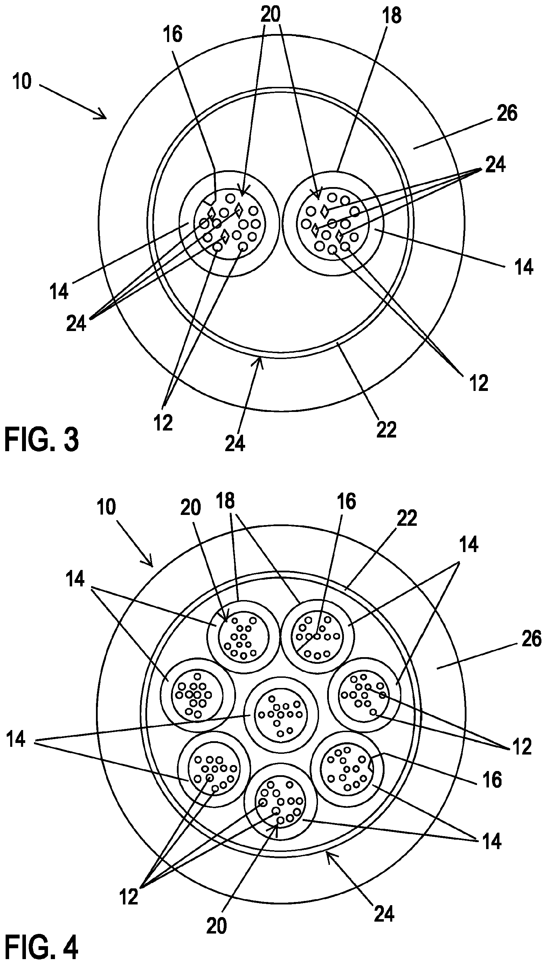

FIGS. 3 and 4 depict embodiments of optical fiber cables 10 including multiple subunits 14 that also are able to achieve a rating of B2_{ca} - s1a, a1, d0. Because these optical fiber cables 10 contain multiple subunits 14, the outer diameter OD of the optical fiber cables 10 is larger than the outer diameter OD of the optical fiber cables 10 of the embodiments of FIGS. 1 and 2. For example, the optical fiber cable 10 depicted in FIG. 3 includes two subunits 14 and has an outer diameter OD of 4 mm to 5 mm, and the optical fiber cable 10 of FIG. 4 includes eight subunits 14 and has an outer diameter of 6.5 mm to 8.5 mm. Other embodiments may include more than eight subunits 14 and the outer diameter may be correspondingly larger (e.g., up to 20 mm or more).

In embodiments, each of the subunits 14 of FIGS. 3 and 4 may contain from one to twelve optical fibers 12. Exemplary embodiments include, e.g., four, six, eight, or twelve optical fibers 12. As compared to the embodiments shown in FIGS. 1 and 2, the subunits 14 are larger and have a higher wall thickness. In this way, the optical fibers 12 have more free space within the subunits 14 of FIGS. 3 and 4. In particular, the subunits 14 of FIGS. 3 and 4 have an outer diameter of about 2 mm and a thickness of 0.05 to 0.5 mm. Additionally, in embodiments, the subunits 14 are made of a flame retardant compound including a mixture of thermoplastic elastomers based on polyolefins (such as PE, PP, polybutene, EPDM rubber, EPR, EVA, EBA, EMA) filled with mineral flame retardant (e.g., ATH, MDH, or CaCO₃). In embodiments, the compound is a blend of PP and a polyolefin or a rubber filled with a mixture of MDH and CaCO₃.

In embodiments, the subunits 14 contain and/or are surrounded by the strengthening yarns 24. In particular, a plurality of strengthening yarns 24 may be wrapped around the first exterior surfaces 18 of the subunits 14 to keep them bundled in the cable sheath 26. In embodiments, one to four strengthening yarns 24 are helically wrapped around the subunits 14 to keep them bundled. In such embodiments, the strengthening yarns 24 may not form a continuous layer (such as yarn layer 22 of FIGS. 1 and 2) around the subunits 14, and talcum powder may be applied to the first exterior surfaces 18 of the subunits 14 to prevent sticking to the cable sheath 26. In embodiments, the subunits 14 include strengthening yarns 24 within the central bore 20 to facilitate connectorizing the subunits 14 (as shown schematically in FIG. 3 with the diamonds representing strengthening yarns 24). During connectorizing, the strengthening yarns 24 are crimped into the connector to provide tensile strain relief for the optical fibers 12. The strengthening yarns 24 used on the interior and/or exterior of the subunit 14 may comprise aramid fibers, glass fibers, basalt fibers, or combinations of two or more thereof.

The plurality of subunits 14 are surrounded with the cable sheath 26 and the bedding layer 32. The cable sheath 26 is made from the same LSZH material described above with respect to the embodiments of FIGS. 1 and 2. Further, in the embodiments in which it is provided, the bedding layer 32 is the same material as described above with respect to FIG. 2. In this way, optical fiber cables 10 having a higher fiber density are able to be provided with a high degree of flame retardance, particularly achieving the rating of B2_{ca}- s1a, a1, d0 described in EN 13501-6.

As used herein, the article "a" is intended to include one or more than one component or element, and is not intended to be construed as meaning only one.

Since modifications, combinations, sub-combinations and variations of the disclosed embodiments incorporating the substance of the embodiments may occur to persons skilled in the art, the invention is only limited by the scope of the appended claims.

## Claims

1. An optical fiber cable (10),
comprising a subunit (14) having a first interior surface (16) and a first exterior surface (18), wherein the first interior surface (16) defines a central bore (20) along a longitudinal axis of the optical fiber cable (10),
comprising at least one optical fiber (12) disposed within the central bore (20) of the subunit (14),
comprising a plurality of strengthening yarns (24) disposed around the subunit (14),
comprising a cable sheath (26) disposed around the plurality of strengthening yarns (24), the cable sheath (26) having a second interior surface (28) and a second exterior surface (30), wherein the second exterior surface (30) defines an outermost surface of the optical fiber cable (10),
wherein the cable sheath (26) comprises a low smoke, zero halogen material,
wherein the low smoke, zero halogen material of the cable sheath (26) has 35% to 45% by weight of a polymer blend, **characterized in that** the polymer blend is filled with mineral-based flame retardant additives,
the low smoke, zero halogen material has a thermal contraction stress of less than 1.0 MPA,
the optical fiber cable (10) further comprises a bedding layer (32) disposed between the second interior surface (28) of the cable sheath (26) and the plurality of strengthening yarns (24), wherein the bedding layer (32) comprises a greater amount of mineral-based flame retardant additives than the cable sheath (26).

2. The optical fiber cable (10) of claim 1, the low smoke, zero halogen material of the cable sheath (26) has an elongation at break of at least 180% but not more than 230% and a Shore A hardness between 40 and 90.

3. The optical fiber cable (10) of claim 1 or 2, wherein the polymer blend of the low smoke, zero halogen material comprises a co-polyester or co-polyether and a polyolefin or a polyolefin elastomer.

4. The optical fiber cable of claims 1, 2, or 3, wherein the low smoke, zero halogen material of the cable sheath further comprises a mineral-based flame retardant additive in an amount of at least 55% by weight

5. The optical fiber cable (10) of any of claims 1 to 4, wherein the optical fiber cable (10) achieves a B2_{ca} - s1a, a1, d0 rating according to EN13501-6.

6. The optical fiber cable (10) of any of claims 1 to 5, wherein the subunit (14) has a thickness between the first interior surface (16) and the first exterior surface (18) of from 0.05 mm to 0.2 mm.

7. The optical fiber cable (10) of any of claims 1 to 6, wherein the subunit (14) comprises a polypropylene-based compound.

8. The optical fiber cable (10) of any of claims 1 to 7, wherein the low smoke, zero halogen material of the cable sheath (26) has a density of at least 1.6 g/cm³ and less than 1.65 g/cm³.

9. The optical fiber cable (10) of any of claims 1 to 8, wherein the plurality of strengthening yarns (24) comprises aramid fibers, glass fibers, basalt fibers, or combinations of two or more thereof.

10. The optical fiber cable (10) of any of claims 1 to 9, wherein the second exterior surface (28) of the cable sheath (26) defines an outer diameter of the optical fiber cable (10) and wherein the outer diameter is 3 mm or less.

11. The optical fiber cable (10) of claim 10, wherein the optical fiber cable is configured to be blown a distance of at least 150 m through a duct having an inner diameter in a range of 3.5 mm to 4 mm.

12. The optical fiber cable (10) of one of claims 1-11, wherein the bedding layer (32) comprises from 10% to 30% by weight of a polyolefin or a polyolefin elastomer and from 70% to 85% by weight of the mineral-based flame retardant additive.

13. The optical fiber cable (10) of claim 12, wherein the polyolefin or polyolefin elastomer comprises at least one of ethylene-vinyl acetate, ethylene butyl acrylate, ethylene methacrylate, ethylene propylene rubber, ethylene propylene diene monomer rubber, styrene-ethylene/butylene-styrene, low density polyethylene, linear low density polyethylene, or polypropylene.

14. The optical fiber cable (10) of one of claims 1-13, wherein a sample of the low smoke, zero halogen material of the cable sheath having a length and width of 100 millimeters and a thickness of 3 millimeters when tested with 50kW irradiation exhibits a peak heat release rate of 200 kW/m² or less, a total heat release of 65 MJ/m² or less, and a smoke production of 150 m²/kg or less when measured using a cone calorimeter according to ISO 5660-1.

## Patentansprüche

1. Lichtleitfaserkabel (10),
umfassend eine Untereinheit (14) mit einer ersten Innenfläche (16) und einer ersten Außenfläche (18), wobei die erste Innenfläche (16) eine zentrale Bohrung (20) entlang einer Längsachse des Lichtleitfaserkabels (10) definiert,
umfassend mindestens eine Lichtleitfaser (12), die innerhalb der zentralen Bohrung (20) der Untereinheit (14) angeordnet ist,
umfassend eine Vielzahl von Verstärkungsfäden (24), die um die Untereinheit (14) herum angeordnet sind,
umfassend einen Kabelmantel (26), der um die Vielzahl von Verstärkungsfäden (24) angeordnet ist, wobei der Kabelmantel (26) eine zweite Innenfläche (28) und eine zweite Außenfläche (30) aufweist, wobei die zweite Außenfläche (30) eine äußerste Fläche des Lichtleitfaserkabels (10) definiert,
wobei der Kabelmantel (26) ein raucharmes, halogenfreies Material umfasst,
wobei das raucharme, halogenfreie Material des Kabelmantels (26) 35 bis 45 Gew.-% einer Polymermischung aufweist, **dadurch gekennzeichnet, dass** die Polymermischung mit flammhemmenden Zusatzstoffen auf Mineralbasis gefüllt ist,
das raucharme, halogenfreie Material eine thermische Kontraktionsspannung von weniger als 1,0 MPA aufweist,
das Lichtleitfaserkabel (10) ferner eine Bettungsschicht (32) umfasst, die zwischen der zweiten Innenfläche (28) des Kabelmantels (26) und der Vielzahl von Verstärkungsfäden (24) angeordnet ist, wobei die Bettungsschicht (32) eine größere Menge an flammhemmenden Zusatzstoffen auf Mineralbasis umfasst als der Kabelmantel (26).

2. Lichtleitfaserkabel (10) nach Anspruch 1, wobei das raucharme, halogenfreie Material des Kabelmantels (26) eine Bruchdehnung von mindestens 180%, aber nicht mehr als 230% und eine Shore-A-Härte zwischen 40 und 90 aufweist.

3. Lichtleitfaserkabel (10) nach Anspruch 1 oder 2, wobei die Polymermischung des raucharmen, halogenfreien Materials einen Co-Polyester oder Co-Polyether und ein Polyolefin oder ein Polyolefin-Elastomer umfasst.

4. Lichtleitfaserkabel nach Anspruch 1, 2 oder 3, wobei das raucharme, halogenfreie Material des Kabelmantels ferner einen flammhemmenden Zusatzstoff auf Mineralbasis in einer Menge von mindestens 55 Gew.-% umfasst.

5. Lichtleitfaserkabel (10) nach einem der Ansprüche 1 bis 4, wobei das Lichtleitfaserkabel (10) eine Bewertung B2_{ca} - s1a, a1, d0 gemäß EN13501-6 erreicht.

6. Lichtleitfaserkabel (10) nach einem der Ansprüche 1 bis 5, wobei die Untereinheit (14) zwischen der ersten Innenfläche (16) und der ersten Außenfläche (18) eine Dicke von 0,05 mm bis 0,2 mm aufweist.

7. Lichtleitfaserkabel (10) nach einem der Ansprüche 1 bis 6, wobei die Untereinheit (14) eine Verbindung auf Polypropylenbasis umfasst.

8. Lichtleitfaserkabel (10) nach einem der Ansprüche 1 bis 7, wobei das raucharme, halogenfreie Material des Kabelmantels (26) eine Dichte von mindestens 1,6 g/cm³ und weniger als 1,65 g/cm³ aufweist.

9. Lichtleitfaserkabel (10) nach einem der Ansprüche 1 bis 8, wobei die Vielzahl von Verstärkungsfäden (24) Aramidfasern, Glasfasern, Basaltfasern oder Kombinationen aus zwei oder mehr davon umfasst.

10. Lichtleitfaserkabel (10) nach einem der Ansprüche 1 bis 9, wobei die zweite Außenfläche (28) des Kabelmantels (26) einen Außendurchmesser des Lichtleitfaserkabels (10) definiert und wobei der Außendurchmesser 3 mm oder weniger beträgt.

11. Lichtleitfaserkabel (10) nach Anspruch 10, wobei das Lichtleitfaserkabel so ausgestaltet ist, dass es über eine Strecke von mindestens 150 m durch einen Kanal mit einem Innendurchmesser im Bereich von 3,5 mm bis 4 mm geblasen wird.

12. Lichtleitfaserkabel (10) nach einem der Ansprüche 1 bis 11, wobei die Bettungsschicht (32) 10 bis 30 Gew.-% eines Polyolefins oder eines Polyolefinelastomers und 70 bis 85 Gew.-% des flammhemmenden Zusatzstoffes auf Mineralbasis umfasst.

13. Lichtleitfaserkabel (10) nach Anspruch 12, wobei das Polyolefin oder Polyolefinelastomer Ethylen-Vinylacetat und/oder Ethylen-Butylacrylat und/oder Ethylen-Methacrylat und/oder Ethylen-Propylen-Kautschuk und/oder Ethylen-Propylen-Dien-Monomer-Kautschuk und/oder Styrol-Ethylen/Butylen-Styrol und/oder Polyethylen niedriger Dichte und/oder lineares Polyethylen niedriger Dichte und/oder Polypropylen umfasst.

14. Lichtleitfaserkabel (10) nach einem der Ansprüche 1 bis 13, wobei eine Probe des raucharmen, halogenfreien Materials des Kabelmantels mit einer Länge und Breite von 100 Millimetern und einer Dicke von 3 Millimetern, wenn sie mit 50 kW Bestrahlung getestet wird, eine Spitzenwärmefreisetzungsrate von 200 kW/m² oder weniger, eine Gesamtwärmefreisetzung von 65 MJ/m² oder weniger und eine Rauchentwicklung von 150 m²/kg oder weniger, gemessen mit einem Kegelkalorimeter gemäß ISO 5660-1, aufweist.

## Revendications

1. Câble à fibre optique (10),
comprenant une sous-unité (14) ayant une première surface intérieure (16) et une première surface extérieure (18), la première surface intérieure (16) définissant un alésage central (30) le long d'un axe longitudinal du câble à fibre optique (10),
comprenant au moins une fibre optique (12) disposée à l'intérieur de l'alésage central (30) de la sous-unité (14),
comprenant une pluralité de fils de renforcement (24) disposés autour de la sous-unité (14),
comprenant une gaine de câble (26) disposée autour de la pluralité de fils de renforcement (24), la gaine de câble (26) ayant une deuxième surface intérieure (28) et une deuxième surface extérieure (30), la deuxième surface extérieure (30) définissant une surface la plus externe du câble à fibre optique (10),
dans lequel la gaine de câble (26) comprend un matériau à faible dégagement de fumée, sans halogène,
dans lequel le matériau à faible dégagement de fumée, sans halogène de la gaine de câble (26) comporte pour 35 % à 45 % en poids un mélange de polymères, **caractérisé en ce que** le mélange de polymères est rempli avec des additifs ignifugeants à base de minéraux,
le matériau à faible dégagement de fumée, sans halogène présente une contrainte de contraction thermique de moins de 1,0 MPa,
le câble à fibre optique (10) comprend en outre une couche d'assise (32) disposée entre la deuxième surface intérieure (28) de la gaine de câble (26) et la pluralité de fils de renforcement (24), dans lequel la couche d'assise (32) comprend une plus grande quantité d'additifs ignifugeants à base de minéraux que la gaine de câble (26).

2. Câble à fibre optique (10) selon la revendication 1, dans lequel le matériau à faible dégagement de fumée, sans halogène de la gaine de câble (26) présente un allongement à la rupture d'au moins 180 %, mais de pas plus de 230 %, et une dureté Shore A comprise entre 40 et 90.

3. Câble à fibre optique (10) selon la revendication 1 ou 2, dans lequel le mélange de polymères du matériau à faible dégagement de fumée, sans halogène comprend un copolyester ou copolyéther et une polyoléfine ou un élastomère de polyoléfine.

4. Câble à fibre optique selon la revendication 1, 2 ou 3, dans lequel le matériau à faible dégagement de fumée, sans halogène de la gaine de câble comprend en outre un additif ignifugeant à base de minéraux dans une quantité d'au moins 55 % en poids.

5. Câble à fibre optique (10) selon l'une quelconque des revendications 1 à 4, le câble à fibre optique (10) atteignant un classement B2_{ca}-S1a, a1, d0 selon la norme EN13501-6.

6. Câble à fibre optique (10) selon l'une quelconque des revendications 1 à 5, dans lequel la sous-unité (14) a une épaisseur entre la première surface intérieure (16) et la première surface extérieure (18) de 0,05 mm à 0,2 mm.

7. Câble à fibre optique (10) selon l'une quelconque des revendications 1 à 6, dans lequel la sous-unité (14) comprend un composé à base de polypropylène.

8. Câble à fibre optique (10) selon l'une quelconque des revendications 1 à 7, dans lequel le matériau à faible dégagement de fumée, sans halogène de la gaine de câble (26) a une masse volumique d'au moins 1,6 g/cm³ et de moins de 1,65 g/cm³.

9. Câble à fibre optique (10) selon l'une quelconque des revendications 1 à 8, dans lequel la pluralité de fils de renforcement (24) comprend des fibres d'aramide, des fibres de verre, des fibres de basalte, ou une combinaison d'au moins deux d'entre elles.

10. Câble à fibre optique (10) selon l'une quelconque des revendications 1 à 9, dans lequel la deuxième surface extérieure (28) de la gaine de câble (26) définit un diamètre externe du câble à fibre optique (10) et dans lequel le diamètre externe est de 3 mm ou moins.

11. Câble à fibre optique (10) selon la revendication 10, le câble à fibre optique étant configuré pour être soufflé sur une distance d'au moins 150 m à travers un conduit ayant un diamètre interne dans une plage de 3,5 mm à 4 mm.

12. Câble à fibre optique (10) selon une des revendications 1 à 11, dans lequel la couche d'assise (32) comprend de 10 % à 30 % en poids d'une polyoléfine ou d'un élastomère de polyoléfine et de 70 % à 85 % en poids de l'additif ignifugeant à base de minéraux.

13. Câble à fibre optique (10) selon la revendication 12, dans lequel la polyoléfine ou l'élastomère de polyoléfine comprend au moins un composé parmi l'éthylène-acétate de vinyle, l'éthylène-acrylate de butyle, le méthacrylate d'éthylène, le caoutchouc éthylène-propylène, le caoutchouc éthylène-propylène-diène monomère, le styrène-éthylène/butylène-styrène, le polyéthylène basse densité, le polyéthylène basse densité linéaire, et le polypropylène.

14. Câble à fibre optique (10) selon une des revendications 1 à 13, dans lequel un échantillon du matériau à faible dégagement de fumée, sans halogène de la gaine de câble ayant une longueur et une largeur de 100 millimètres et une épaisseur de 3 millimètres, testé avec une irradiation de 50 kW, présente une vitesse maximale de dégagement de chaleur de 200 kW/m² ou moins, un dégagement total de chaleur de 65 MJ/m² ou moins, et une production de fumée de 150 m²/g ou moins, lorsqu'ils sont mesurés au moyen d'un calorimètre conique selon la norme ISO 5660-1.
